# EUROPÄISCHE PATENTSCHRIFT

(11) **EP 3 530 976 B1**
(45) Veröffentlichungstag und Bekanntmachung des Hinweises auf die Patenterteilung: **15.07.2020**
(21) Anmeldenummer: 19155192.8
(22) Anmeldetag: 04.02.2019
(51) Int. Cl.: F16D 48/06

(54) **VERFAHREN ZUR DIAGNOSE EINES HYDRAULIKSYSTEMS EINES KRAFTFAHRZEUGS**
METHOD FOR DIAGNOSING A HYDRAULIC SYSTEM OF A MOTOR VEHICLE
PROCÉDÉ DE DIAGNOSTIC D'UN SYSTÈME HYDRAULIQUE D'UN VÉHICULE AUTOMOBILE

(30) Priorität: 26.02.2018 DE 102018202844
(43) Veröffentlichungstag der Anmeldung: 28.08.2019
(73) Patentinhaber: Magna PT B.V. & Co. KG, 74199 Untergruppenbach (DE)
(72) Erfinder: PROST, Jacques, 74074 Heilbronn (DE); WENDT, Moritz, 74199 Untergruppenbach (DE); KECK, Ingo, 74199 Untergruppenbach (DE); STEPPER, Thorsten, 74638 Waldenburg (DE); FILP, Mathias, 74199 Untergruppenbach (DE); SCHALLER, Martin, 64732 Bad König (DE)
(74) Vertreter: Rausch, Gabriele

(56) Entgegenhaltungen:
- EP-A2- 1 816 376
- US-A1- 2015 266 468

## Beschreibung

### Gebiet der Erfindung

Die vorliegende Erfindung betrifft ein Verfahren zur Diagnose eines Hydrauliksystems eines Kraftfahrzeugs, wobei das Hydrauliksystem einen Kühlkreislauf bildet, wobei im Kühlkreislauf zumindest eine zu kühlende Komponente, nämlich eine elektrische Maschine (E-Maschine, Elektromotor), angeordnet ist.

### Stand der Technik

Im Stand der Technik ist es bekannt, dass zur Ermittlung des Zustands eines Hydrauliksystems in einem Kraftfahrzeug, beispielsweise mittels elektrischer Signale eines Aktuators, welcher zum Betätigen einer zu kühlenden Komponente vorgesehen ist, überwacht werden und bei unerwarteter Änderung der Messwerte eine Zustandsinformation über das Hydrauliksystem abgegeben wird.

Nachteilig hierbei ist, dass Teile des Hydrauliksystems, keinen direkten Einfluss auf den Aktuator haben, z.B. passiv betätigte Teile wie das Ventil eines Durchflussbegrenzers, wodurch es schwierig wird die Diagnose des Hydrauliksystems nur mit den Signalen des Aktuators zu bestimmen.

Das Dokument EP 1 816 376 A2 offenbart eine Fahrzeugsteuervorrichtung mit Mitteln zur Berechnung des tatsächlichen Widerstandsdrehmoments, die das Widerstandsdrehmoment eines Kraftübertragungsmechanismus berechnen, mit Berechnungsmittel für die Schmieröldurchflussrate, die die Fließgeschwindigkeit des Schmieröls gemäß einem realen Widerstandsmoment bestimmen, mit Berechnungsmittel für das Referenzwiderstandsdrehmoment, das ein Referenzwiderstandsdrehmoment als Referenz berechnet, mit Berechnungsmittel für die Referenzschmieröldurchflussrate, die eine Referenzschmieröldurchflussrate gemäß dem Referenzschleppmoment berechnet, mit Berechnungsmittel für die Korrekturrate, die einen Korrekturwert berechnet, der der Korrekturrate der Schmierölströmungsrate gemäß der Schmieröldurchflussrate und der Referenzschmieröldurchflussrate entspricht und mit einer Durchflussratenkorrektureinrichtung, die ein Antriebssignal an einen Aktuator ausgibt, der die Schmieröldurchflussrate gemäß der Korrekturrate steuert.

### Zusammenfassung der Erfindung

Es ist eine Aufgabe der Erfindung, ein Verfahren zur Diagnose eines Hydrauliksystems eines Kraftfahrzeugs bereitzustellen.

Die Lösung der Aufgabe erfolgt durch ein Verfahren zur Diagnose eines Hydrauliksystems eines Kraftfahrzeugs mit den Merkmalen aus Anspruch 1.

Erfindungsgemäß ist ein Verfahren zur Diagnose eines Hydrauliksystems eines Kraftfahrzeugs vorgesehen, wobei das Hydrauliksystem einen Kühlkreislauf bildet, wobei im Kühlkreislauf zumindest eine zu kühlende Komponente angeordnet ist, wobei die zumindest eine zu kühlende Komponente eine E-Maschine ist, wobei in einem ersten Schritt der Kühlkreislauf dazu eingerichtet wird, die zu kühlende Komponente mit einer ersten Kühlstrommenge anzuströmen, dass danach die Reaktion der zu kühlenden Komponente ermittelt wird, dass in einem zweiten Schritt der Kühlkreislauf dazu eingerichtet wird, die zu kühlende Komponente mit einer zweiten Kühlstrommenge anzuströmen, wobei die zweite Kühlstrommenge größer ist als die erste Kühlstrommenge, dass danach die Reaktion der zu kühlenden Komponente ermittelt wird, wobei das Verhältnis der beiden Reaktionen ermittelt wird, um den Zustand des Kühlkreislaufs und somit des Hydrauliksystems festzustellen.

Es wird eine Diagnose durch Überwachen der zumindest einen zu kühlenden Komponente im Hydrauliksystem durchgeführt, wodurch zuverlässiger Fehler oder Mängel, beispielsweise eine ausreichend vorhandene Kühlstrommenge, erkannt werden.

Abhängig davon welche zu kühlende Komponente überwacht werden soll, beispielsweise eine Doppelkupplung oder eine E-Maschine, sind unterschiedliche Abläufe und Messverfahren zur Ermittlung der Reaktion der zu kühlenden Komponente möglich.

Viele E-Maschinen weisen ein Hydrauliksystem auf, welches zur Kühlung und/oder Schmierung von Bauteilen in der E-Maschine vorgesehen ist.

Dabei werden erfindungsgemäß zwei unterschiedliche Kühlstrommengen im Kühlkreislauf eingestellt, die somit, bei funktionierendem Kühlkreislauf, zu entsprechenden unterschiedlichen Effekten an den Komponenten führen müssen. Falls der erwartete Unterschied in den Effekten bzw. Reaktionen der Komponenten nicht eintritt, wird erfindungsgemäß auf eine Funktionsstörung des Kühlkreislaufes und daher des Hydrauliksystems geschlossen.

Erfindungsgemäß wird während das aktive Teilgetriebe eines Doppelkupplungsgetriebes von einer E-Maschine angetrieben wird, das passive Teilgetriebe des Doppelkupplungsgetriebes in eine Neutralstellung gebracht, welches mit der ersten Kühlstrommenge angeströmt wird, wobei der Strom- oder Spannungsanstieg aufgrund des Schleppmoments des passiven Teilgetriebes an der E-Maschine gemessen wird, nämlich in einer ersten Messung gemessen wird, wobei nach der Messung des Strom- oder Spannungsanstiegs die Kupplung im passiven Teilgetriebe wieder geschlossen wird, so dass das passive Teilgetriebe mit der E-Maschine verbunden ist und eine zweite Messung mit der zweiten Kühlstrommenge durchgeführt wird, wobei die beiden Messwerte in einem dritten Schritt verglichen werden.

Bevorzugt wird dabei der durch das Schleppmoment verursachte Stromanstieg in der E-Maschine gemessen, wobei der Stromanstieg mit der Erhöhung des Schleppmoments zusammenhängt, d. h. je höher das Schleppmoment, desto höher der Stromanstieg in der E-Maschine. Gleiches gilt, wenn statt des Stroms die Spannung gemessen wird.

Die Kühlstrommenge wird durch ein Fluid, bevorzugt Öl, bereitgestellt.

Öl bietet den Vorteil, dass es auch zum Schmieren von zu kühlenden Komponenten genutzt werden kann.

Beispielsweise können dies bei Doppelkupplungen oder E-Maschinen Lager bzw. Lagerstellen sein.

Zur Durchführung der Diagnose wird die Kühlstrommenge in eine erste Kühlstrommenge und in eine zweite Kühlstrommenge zur Durchführung des Verfahrens bereitgestellt, wobei die erste Kühlstrommenge in einem Bereich zwischen 5% bis 30%, vorzugsweise in einem Bereich zwischen 10% bis 20% der Gesamtkühlstrommenge im Hydrauliksystem befindet.

Die erste Kühlstrommenge soll bevorzugt in einem Bereich liegen, der gerade noch ausreichend ist, um die Funktionalität zu gewährleisten. Die Menge soll jedoch so gering sein, dass ein Fehlen durch ein entsprechendes Messverfahren ermittelt werden kann.

Die zweite Kühlstrommenge befindet sich in einem Bereich zwischen 70% bis 100%, vorzugsweise in einem Bereich zwischen 80% bis 95% der Gesamtkühlstrommenge im Hydrauliksystem.

Die zweite Kühlstrommenge ist jene Menge, in welcher die optimale Funktionalität der zu kühlenden Komponente gewährleistet ist.

Die zumindest eine zu kühlende Komponente ist in einer nicht erfindungsgemäßen Ausführungsvariante eine Doppelkupplung eines Doppelkupplungsgetriebes. Doppelkupplungen sind bevorzugt als Reibkupplungen, insbesondere Mehrscheibenkupplung, ausgebildet, wobei beim Schließen der Lamellen dieser Reibkupplungen Reibung und somit Wärme entsteht, wobei zum optimalen bzw. effizienteren Betrieb einer Kupplung überschüssige Wärme abgeführt werden soll.

Dabei kann der Einfluss der Kühlstrommenge auf das Kupplungsschleppmoment gemessen werden.

Zur Durchführung der Messung wird während das aktive Teilgetriebe eines Doppelkupplungsgetriebes von einer Verbrennungskraftmaschine angetrieben wird, das passive Teilgetriebe eines Doppelkupplungsgetriebes in eine Neutralstellung gebracht und die Verzögerung des Schleppmoments des passiven Teilgetriebes, welches in einem ersten Schritt mit der ersten Kühlstrommenge angeströmt wird, in einer ersten Messung gemessen. Nach der Messung dieser Verzögerung wird die Kupplung im passiven Teil wieder geschlossen, so dass das passive Teilgetriebe mit der Verbrennungskraftmaschine verbunden ist und in einem zweiten Schritt eine zweite Messung der Verzögerung der Kupplung mit der zweiten Kühlstrommenge durchgeführt, wobei die beiden Messwerte in einem dritten Schritt verglichen werden, wobei die Verzögerung bei der zweiten Messung kürzer sein soll als bei der ersten Messung.

Ist die Verzögerung der zweiten Messung nicht kürzer, kann ein Fehler im Hydrauliksystem bzw. Kühlkreislaufsystem vorliegen. Beispielsweise kann ein defektes Ventil, oder eine fehlende Kühlstrommenge als Ursache vorliegen. Als Reaktion darauf kann ein Warnsignal, beispielsweise ein optisches Signal auf einem Display im Kraftfahrzeug, für den Kraftfahrzeuglenker abgegeben werden.

In einer alternativen Ausführungsform wird die Temperatur an der Kupplung eines Teilgetriebes gemessen, wobei in einem ersten Schritt eine erste Messung mit der ersten Kühlstrommenge erfolgt und wobei in einem zweiten Schritt eine zweite Messung mit der zweiten Kühlstrommenge erfolgt, wobei in einem dritten Schritt der erste Messwert mit dem zweiten Messwert verglichen wird, wobei der der gemessene Temperaturwert mit der zweiten Kühlstrommenge niedriger als der Temperaturwert mit der ersten Kühlstrommenge sein soll.

In einer bevorzugten Ausführungsform der vorliegenden Erfindung erfolgt während des elektrischen Antriebs des Kraftfahrzeugs mittels der E-Maschine in einem ersten Schritt eine erste Messung des Antriebsmoments mit der ersten Kühlstrommenge und in einem zweiten Schritt erfolgt eine zweite Messung des Antriebsmoments mit der zweiten Kühlstrommenge, wobei in einem dritten Schritt der erste Messwert mit dem zweiten Messwert verglichen wird, wobei das gemessene Antriebsmoment mit der zweiten Kühlstrommenge höher als das Antriebsmoment mit der ersten Kühlstrommenge sein soll.

In einer weiteren Ausführungsform wird während des Antriebs des Kraftfahrzeugs mittels der E-Maschine zwischen der ersten Kühlstrommenge und der zweiten Kühlstrommenge geschalten und jeweils das Antriebsmoment an den Antriebsrädern gemessen, wobei das Antriebsmoment der E-Maschine bei der zweiten Kühlstrommenge niedriger sein soll als das Antriebsmoment bei der ersten Kühlstrommenge.

In einer weiteren Ausführungsform wird die Temperatur der E-Maschine des Kraftfahrzeugs mittels der E-Maschine durch Vergleichen der Temperatur bei Messung mit der zweiten Kühlstrommenge mit einem vordefinierten Temperaturwert verglichen, wobei die gemessene Temperatur niedriger als der vordefinierte Temperaturwert sein soll.

Alternativ kann die Temperaturmessung in der ersten Kühlstrommenge und in der zweiten Kühlstrommenge bei einem konstanten Betriebspunkt, beispielsweise im Leerlauf, der E-Maschine oder der Verbrennungskraftmaschine erfolgen.

Diese Verfahren können im Prinzip für alle Kupplungen oder Getriebe, welche ein Hydrauliksystem aufweisen, angewandt werden.

## Patentansprüche

1. Verfahren zur Diagnose eines Hydrauliksystems eines Kraftfahrzeugs, wobei das Hydrauliksystem einen Kühlkreislauf bildet, wobei im Kühlkreislauf zumindest eine zu kühlende Komponente, angeordnet ist, wobei die zumindest eine zu kühlende Komponente eine E-Maschine ist, wobei in einem ersten Schritt der Kühlkreislauf dazu eingerichtet wird, die zu kühlende Komponente mit einer ersten Kühlstrommenge anzuströmen, dass danach die Reaktion der zu kühlenden Komponente ermittelt wird, dass in einem zweiten Schritt der Kühlkreislauf dazu eingerichtet wird, die zu kühlende Komponente mit einer zweiten Kühlstrommenge anzuströmen, wobei die zweite Kühlstrommenge größer ist als die erste Kühlstrommenge, dass danach die Reaktion der zu kühlenden Komponente ermittelt wird, wobei das Verhältnis der beiden ermittelten Reaktionen ermittelt wird, um den Zustand des Kühlkreislaufs und somit des Hydrauliksystems festzustellen,
**dadurch gekennzeichnet, dass** während das aktive Teilgetriebe eines Doppelkupplungsgetriebes von der E-Maschine angetrieben wird, das passive Teilgetriebe des Doppelkupplungsgetriebes in eine Neutralstellung gebracht wird, welches mit der ersten Kühlstrommenge angeströmt wird, wobei der Strom- oder Spannungsanstieg aufgrund des Schleppmoments des passiven Teilgetriebes an der E-Maschine gemessen wird, nämlich in einer ersten Messung gemessen wird, wobei nach der Messung des Strom- oder Spannungsanstiegs die Kupplung im passiven Teilgetriebe wieder geschlossen wird, so dass das passive Teilgetriebe mit der E-Maschine verbunden ist und eine zweite Messung mit der zweiten Kühlstrommenge durchgeführt wird, wobei die beiden Messwerte in einem dritten Schritt verglichen werden.

2. Verfahren nach Anspruch 1,
**dadurch gekennzeichnet , dass** die Kühlstrommenge durch ein Fluid, bevorzugt Öl, bereitgestellt wird.

3. Verfahren nach Anspruch 1,
**dadurch gekennzeichnet , dass** die Kühlstrommenge auch zum Schmieren der zu kühlenden Komponenten ausgebildet ist.

4. Verfahren nach Anspruch 1,
**dadurch gekennzeichnet, dass** die erste Kühlstrommenge in einem Bereich zwischen 5% bis 30%, vorzugsweise in einem Bereich zwischen 10% bis 20%, der Gesamtkühlstrommenge des Kühlkreislaufs liegt.

5. Verfahren nach Anspruch 1,
**dadurch gekennzeichnet, dass** die zweite Kühlstrommenge in einem Bereich zwischen 70% bis 100%, vorzugsweise in einem Bereich zwischen 80% bis 95%, der Gesamtkühlstrommenge des Kühlkreislaufs liegt.

6. Verfahren nach Anspruch 1,
**dadurch gekennzeichnet , dass** während des elektrischen Antriebs des Kraftfahrzeugs mittels der E-Maschine in einem ersten Schritt eine erste Messung des Antriebsmoments mit der ersten Kühlstrommenge erfolgt und in einem zweiten Schritt eine zweite Messung des Antriebsmoments mit der zweiten Kühlstrommenge erfolgt, wobei in einem dritten Schritt der erste Messwert mit dem zweiten Messwert verglichen wird.

7. Verfahren nach Anspruch 1,
**dadurch gekennzeichnet , dass** während des Antriebs des Kraftfahrzeugs mittels der E-Maschine zwischen der ersten Kühlstrommenge und der zweiten Kühlstrommenge geschalten wird, wobei jeweils das Antriebsmoment an den Antriebsrädern gemessen wird.

8. Verfahren nach Anspruch 1,
**dadurch gekennzeichnet , dass** die Temperatur der E-Maschine, während des Antriebs des Kraftfahrzeugs mittels der E-Maschine, mit der zweiten Kühlstrommenge gemessen wird und mit einem vordefinierten Temperaturwert verglichen wird.

9. Verfahren nach Anspruch 1, **dadurch gekennzeichnet , dass** die Temperaturmessung in der ersten Kühlstrommenge und in der zweiten Kühlstrommenge bei einem konstanten Betriebspunkt, beispielsweise im Leerlauf, der E-Maschine oder der Verbrennungskraftmaschine erfolgt.

## Claims

1. Method for diagnosing a hydraulic system of a motor vehicle, the hydraulic system forming a cooling circuit, at least one component to be cooled being arranged in the cooling circuit, the at least one component to be cooled being an electric machine, the cooling circuit being set up in a first step to direct a first cooling flow quantity onto the component to be cooled, in that the reaction of the component to be cooled is determined afterwards, in that the cooling circuit is set up in a second step to direct a second cooling flow quantity onto the component to be cooled, the second cooling flow quantity being greater than the first cooling flow quantity, in that the reaction of the component to be cooled is determined afterwards, the ratio of the two determined reactions being determined, in order to establish the state of the cooling circuit and therefore of the hydraulic system, **characterized in that**, while the active component transmission of a double clutch transmission is being driven by the electric machine, the passive component transmission of the double clutch transmission is moved into a neutral position, onto which passive component transmission the first cooling flow quantity is directed, the current or voltage increase on account of the drag torque of the passive component transmission being measured at the electric machine, namely being measured in a first measurement, the clutch in the passive component transmission being closed again after the measurement of the current or voltage increase, with the result that the passive component transmission is connected to the electric machine and a second measurement is carried out with the second cooling flow quantity, the two measured values being compared in a third step.

2. Method according to Claim 1, **characterized in that** the cooling flow quantity is provided by way of a fluid, preferably oil.

3. Method according to Claim 1, **characterized in that** the cooling flow quantity is also configured to lubricate the components to be cooled.

4. Method according to Claim 1, **characterized in that** the first cooling flow quantity lies in a range of from 5% to 30%, preferably in a range of from 10% to 20%, of the total cooling flow quantity of the cooling circuit.

5. Method according to Claim 1, **characterized in that** the second cooling flow quantity lies in a range of from 70% to 100%, preferably in a range of from 80% to 95%, of the total cooling flow quantity of the cooling circuit.

6. Method according to Claim 1, **characterized in that** a first measurement of the drive torque by way of the first cooling flow quantity takes place in a first step during the electric drive of the motor vehicle by means of the electric machine, and a second measurement of the drive torque by way of the second cooling flow quantity takes place in a second step, the first measured value being compared with the second measured value in a third step.

7. Method according to Claim 1, **characterized in that** a switch is carried out between the first cooling flow quantity and the second cooling flow quantity during the drive of the motor vehicle by means of the electric machine, the drive torque being measured in each case at the drive wheels.

8. Method according to Claim 1, **characterized in that**, during the drive of the motor vehicle by means of the electric machine, the temperature of the electric machine is measured by way of the second cooling flow quantity, and is compared with a predefined temperature value.

9. Method according to Claim 1, **characterized in that** the temperature measurement takes place in the first cooling flow quantity and in the second cooling flow quantity at a constant operating point, for example in neutral, of the electric machine or the internal combustion engine.

## Revendications

1. Procédé de diagnostic d'un système hydraulique d'un véhicule automobile, le système hydraulique formant un circuit de refroidissement, au moins un composant à refroidir étant disposé dans le circuit de refroidissement, l'au moins un composant à refroidir étant une machine électrique, le circuit de refroidissement, dans une première étape, étant prévu pour acheminer une première quantité de flux de refroidissement au composant à refroidir, en ce qu'ensuite la réaction du composant à refroidir est déterminée, en ce que dans une deuxième étape, le circuit de refroidissement est prévu pour acheminer une deuxième quantité de flux de refroidissement au composant à refroidir, la deuxième quantité de flux de refroidissement étant supérieure à la première quantité de flux de refroidissement, en ce qu'ensuite la réaction du composant à refroidir est déterminée, le rapport des deux réactions déterminées étant déterminé afin d'établir l'état du circuit de refroidissement et par conséquent du système hydraulique,
**caractérisé en ce que** pendant que la transmission partielle active d'une transmission à double embrayage est entraînée par la machine électrique, la transmission partielle passive de la transmission à double embrayage est amenée dans une position neutre à laquelle est acheminée la première quantité de flux de refroidissement, l'augmentation de courant ou de tension due au couple de patinage de la transmission partielle passive étant mesurée au niveau de la machine électrique, à savoir étant mesurée dans une première mesure, et après la mesure de l'augmentation de courant ou de tension, l'embrayage dans la transmission partielle passive étant à nouveau fermé de telle sorte que la transmission partielle passive est connectée à la machine électrique et une deuxième mesure avec la deuxième quantité de flux de refroidissement étant effectuée, les deux valeurs de mesure étant comparées dans une troisième étape.

2. Procédé selon la revendication 1,
**caractérisé en ce que** la quantité de flux de refroidissement est fournie par un fluide, de préférence de l'huile.

3. Procédé selon la revendication 1,
**caractérisé en ce que** la quantité de flux de refroidissement est également réalisée pour lubrifier les composants à refroidir.

4. Procédé selon la revendication 1,
**caractérisé en ce que** la première quantité de flux de refroidissement est dans une plage comprise entre 5 % et 30 %, de préférence dans une plage comprise entre 10 % et 20 %, de la quantité de flux de refroidissement totale du circuit de refroidissement.

5. Procédé selon la revendication 1,
**caractérisé en ce que** la deuxième quantité de flux de refroidissement est dans une plage comprise entre 70 % et 100 %, de préférence dans une plage comprise entre 80 % et 95 %, de la quantité de flux de refroidissement totale du circuit de refroidissement.

6. Procédé selon la revendication 1,
**caractérisé en ce que** pendant l'entraînement électrique du véhicule automobile au moyen de la machine électrique, dans une première étape, on effectue une première mesure du couple d'entraînement avec la première quantité de flux de refroidissement et dans une deuxième étape, on effectue une deuxième mesure du couple d'entraînement avec la deuxième quantité de flux de refroidissement, dans une troisième étape, la première valeur de mesure étant comparée avec la deuxième valeur de mesure.

7. Procédé selon la revendication 1,
**caractérisé en ce que** pendant l'entraînement du véhicule automobile au moyen de la machine électrique, on commute entre la première quantité de flux de refroidissement et la deuxième quantité de flux de refroidissement, le couple d'entraînement au niveau des roues motrices étant mesuré dans chaque cas.

8. Procédé selon la revendication 1,
**caractérisé en ce que** l'on mesure la température de la machine électrique pendant l'entraînement du véhicule automobile au moyen de la machine électrique avec la deuxième quantité de flux de refroidissement et on la compare avec une valeur de température prédéfinie.

9. Procédé selon la revendication 1,
**caractérisé en ce que** la mesure de température dans la première quantité de flux de refroidissement et dans la deuxième quantité de flux de refroidissement est effectuée à un point de fonctionnement constant, par exemple en marche à vide, de la machine électrique ou du moteur à combustion interne.
